# EUROPÄISCHE PATENTSCHRIFT

(11) **EP 3 701 607 B1**
(45) Veröffentlichungstag und Bekanntmachung des Hinweises auf die Patenterteilung: **13.09.2023**
(21) Anmeldenummer: 18793400.5
(22) Anmeldetag: 24.10.2018
(51) Int. Cl.: H02H 1/00, H02H 1/04, G05B 15/02, G05B 19/418

(54) **VERFAHREN UND SYSTEM ZUR ERMITTLUNG EINES GEFÄHRDUNGSPOTENTIALS EINER ELEKTRISCHEN ANLAGE**
METHOD AND SYSTEM FOR DETERMINING A HAZARD POTENTIAL OF AN ELECTRICAL INSTALLATION
PROCÉDÉ ET SYSTÈME DE DÉTERMINATION D'UN POTENTIEL DE DANGER D'UNE INSTALLATION ÉLECTRIQUE

(30) Priorität: 27.10.2017 DE 102017125310
(43) Veröffentlichungstag der Anmeldung: 02.09.2020
(73) Patentinhaber: Eaton Intelligent Power Limited, Dublin 4 (IE)
(72) Erfinder: GEGENBAUER, Bernhard, 3830 Waidhofen an der Thaya (AT); REUBERGER, Georg, 3931 Schweiggers (AT); STEPÁN, Frantisek, 54941 Cervený Kostelec (CZ)
(74) Vertreter: Epping - Hermann - Fischer
(86) Internationale Anmeldenummer: PCT/EP2018/079101
(87) Internationale Veröffentlichungsnummer: WO 2019/081553

(56) Entgegenhaltungen:
- WO-A1-2009/048960
- Chet E. Davies: "A Guide to Performing An Arc Flash Hazard Assessment Using Power Analysis Software", , 21. November 2003 (2003-11-21), Seiten 1-15, XP055540130, Gefunden im Internet: URL:https://www.easypower.com/files/Perfor ming_Arc_Flash_Hazard_Assessment.pdf [gefunden am 2019-01-10]
- K.J. LIPPERT ET AL: "Understanding arc flash hazards", PULP AND PAPER INDUSTRY TECHNICAL CONFERENCE, 2004. CONFERENCE RECORD OF THE 2004 ANNUAL VICTORIA, BC, CANADA JUNE 27-JULY 1, 2004, 1. Januar 2004 (2004-01-01), Seiten 120-129, XP055540136, Piscataway, NJ, USA DOI: 10.1109/PAPCON.2004.1338372 ISBN: 978-0-7803-8282-4
- Anonymous: "Protection contre les arcs électriques dans les systèmes d'alimentation - Analyse des risques d'arc électrique", , 1. Oktober 2014 (2014-10-01), Seiten 1-8, XP055540045, Gefunden im Internet: URL:http://www.eaton.eu/DE/Europe/Electric al/ProductsServices/Services/EngineeringCo nsultancy/ArcFlashAnalysis/index.htm [gefunden am 2019-01-09]
- Anonymous: "Störlichtbögen wirkungsvoll verhindern", Fachartikel für den Schaltschrankbau: Schaltschrankbau - Unterverteilung und Gehäuse, 31. Juli 2014 (2014-07-31), Seiten 1-2, XP055540018, Gefunden im Internet: URL:https://www.schaltschrankbau-magazin.d e/artikel/stoerlichtboegen-wirkungsvoll-ve rhindern/print/ [gefunden am 2019-01-09]

## Beschreibung

### TECHNISCHES GEBIET

Die Erfindung betrifft ein Verfahren und ein System zur rechnergestützten Planung beziehungsweise rechnergestützten Konfiguration einer elektrischen Anlage, insbesondere eines elektrischen Schaltschranks, bei dem Bauteile, die in der elektrischen Anlage vorgesehen sind, in einem oder durch einen Rechner erfasst werden. Dabei wird ein Gefährdungspotential anhand zumindest eines Lichtbogenenergie-Parameters der elektrischen Anlage oder anhand einer voraussichtlichen Lichtbogenenergie in der elektrischen Anlage, welche die Energie eines in der elektrischen Anlage auftretenden Lichtbogens angibt und insbesondere aus dem zumindest einen Lichtbogenenergie-Parameter bestimmt wird, durch den Rechner ermittelt und angezeigt. Weiterhin betrifft die Erfindung ein Computerprogrammprodukt mit einem darauf gespeicherten Computerprogramm, das in/auf den Rechner des genannten Systems ladbar ist und dort das genannte Verfahren ausführt, wenn das Computerprogramm dort ausgeführt wird.

### STAND DER TECHNIK

Ein Verfahren, ein System, ein Computerprogrammprodukt und eine elektrische Anlage der oben genannten Art sind aus dem Stand der Technik grundsätzlich bekannt. Insbesondere betreffen solche Verfahren und System CAD-Systeme (Computer Aided Design Systeme). Moderne Software ermöglicht nicht nur die Planung der räumlichen Anordnung der in der elektrischen Anlage verbauten Komponenten, sondern ermöglicht beispielsweise auch die elektrische Simulation.

Chet E. Davies, "A Guide to Performing An Arc Flash Hazard Assessment Using Power Analysis Software", EasyPower LLC, 21. November 2003, Seiten 1-15 offenbart dazu die Berechnung und Anzeige eines Gefährdungspotentials anhand eines Lichtbogenenergie-Parameters, um daraus die Art einer Schutzkleidung für eine elektrische Anlage zu bestimmen.

Die WO 2009/048960 A1 offenbart weiterhin ein Computersystem zur Konvertierung von CAD-Daten eines elektrischen Stromversorgungssystems in ein oder mehrere Objekte für die Leistungsanalyse und Simulation. Insbesondere wird dort auf eine Lichtbogenwahrscheinlichkeit und eine Schutzkleidung Bezug genommen.

K.J. Lippert et al: "Understanding arc flash hazards", Pulp and pater industry technical conference, 2004, 1. Januar 2004, Seiten 120-129 offenbart schließlich die Verringerung der Lichtbogengefahr durch die Strombegrenzung von "Molded Case Circuit Breakers" und insbesondere Formeln zur numerischen Quantifizierung der Lichtbogenenergie und eine Tabellenkalkulation, um automatisch Berechnungen zur Ermittlung einer auftretenden Energie und einer Lichtbogengefahr durchzuführen.

Problematisch an den bekannten Verfahren und Systemen zur Planung beziehungsweise Konfiguration einer elektrischen Anlage ist, dass ein durch die Anlage gebildetes Gefährdungspotential nur von Personen mit viel Fachwissen und Erfahrung abgeschätzt werden kann, dieses Personal aber schwer verfügbar ist. Teileweise werden elektrische Anlagen daher auch von weniger gut ausgebildetem Personal geplant und gebaut, insbesondere wenn es sich um kleinere Projekte handelt. De facto werden so elektrische Anlagen mit unbekanntem Gefährdungspotential errichtet. Ist dieses Gefährdungspotential hoch, so stellt die elektrische Anlage ein hohes Risiko dar, dass Einrichtungen in der elektrischen Anlage beschädigt werden und/oder Personen, die sich in oder in der Nähe der elektrischen Anlage aufhalten, zu Schaden kommen.

### OFFENBARUNG DER ERFINDUNG

Eine Aufgabe der Erfindung ist es daher, ein verbessertes Verfahren und ein verbessertes System zur Planung beziehungsweise Konfiguration einer elektrischen Anlage sowie eine verbesserte elektrischen Anlage selbst anzugeben. Insbesondere soll vermieden werden, dass Einrichtungen in der elektrischen Anlage durch ein unerkannt hohes Gefährdungspotential beschädigt werden und/oder Personen, die sich in oder in der Nähe der elektrischen Anlage aufhalten, zu Schaden kommen.

Die Aufgabe der Erfindung wird durch ein rechnergestütztes Verfahren der eingangs genannten Art mit den Merkmalen des Anspruchs 1 gelöst, bei dem für die Ermittlung des Gefährdungspotentials zusätzlich zumindest ein Lichtbogenwahrscheinlichkeits-Parameter der elektrischen Anlage oder eine voraussichtliche Lichtbogenwahrscheinlichkeit, welche die Eintrittswahrscheinlichkeit für das Auftreten eines Lichtbogens in der elektrischen Anlage angibt und die aus dem zumindest einen Lichtbogenwahrscheinlichkeits-Parameter bestimmt wird, durch den Rechner herangezogen wird.

Die Aufgabe der Erfindung wird durch ein System der eingangs genannten Art mit den Merkmalen des Anspruchs 11 gelöst, bei dem der Rechner dazu eingerichtet ist, für die Ermittlung des Gefährdungspotentials zusätzlich zumindest einen Lichtbogenwahrscheinlichkeits-Parameter der elektrischen Anlage oder eine voraussichtliche Lichtbogenwahrscheinlichkeit, welche die Eintrittswahrscheinlichkeit für das Auftreten eines Lichtbogens in der elektrischen Anlage angibt und die aus dem zumindest einen Lichtbogenwahrscheinlichkeits-Parameter bestimmt wird, heranzuziehen.

Die Aufgabe der Erfindung wird weiterhin durch ein Computerprogrammprodukt mit einem darauf gespeicherten Computerprogramm gelöst, das in/auf den Rechner des genannten Systems ladbar ist und dort das genannte Verfahren ausführt, wenn das Computerprogramm dort ausgeführt wird.

Durch die vorgeschlagenen Maßnahmen kann ein hohes Gefährdungspotential einer elektrischen Anlage schon im Planungsstadium auf einfache Weise erkannt werden. Unfälle, bei denen Einrichtungen in der elektrischen Anlage beschädigt werden und/oder bei denen Personen, die sich in oder in der Nähe der elektrischen Anlage aufhalten, können dadurch weitgehend vermieden werden.

Das genannte Gefährdungspotential kann dabei für die elektrische Anlage selbst und/oder für eine in oder in der Nähe der elektrischen Anlage befindliche Person ermittelt werden.

Weiterhin kann das Gefährdungspotential für den Normalbetrieb der elektrischen Anlage und/oder für den Wartungsfall der elektrischen Anlage und/oder für den Störfall der elektrischen Anlage ermittelt werden. Der das Gefährdungspotential bestimmende Lichtbogen kann insbesondere ein Schaltlichtbogen (Normalbetrieb) oder ein Störlichtbogen (Störfall) sein. Weiterhin kann das Gefährdungspotential für den Wartungsfall der elektrischen Anlage bestimmt werden, bei dem beispielsweise Türen eines Schaltschranks geöffnet und nicht wie im Normalbetrieb geschlossen sind. Dadurch besteht im Wartungsfall in der Regel ein höheres Gefährdungspotential.

Vorteilhaft wird für die Berechnung des Gefährdungspotential für die Gesamtheit der in der elektrischen Anlage vorgesehenen Bauteile bestimmt. Insbesondere bei der Bestimmung des Gefährdungspotentials größerer elektrischer Anlagen stoßen unter Anwendung herkömmlicher Methoden selbst Experten mit viel Fachwissen an ihre Grenzen, und die Bestimmung des Gefährdungspotentials ist aufgrund der Komplexität größerer elektrischer Anlagen zeitaufwändig und auch fehleranfällig. Durch die vorgeschlagenen Maßnahmen werden bei der Bestimmung des Gefährdungspotentials dagegen die Lichtbogenenergie und Lichtbogenwahrscheinlichkeit aller in der elektrischen Anlage vorgesehenen Bauteile korrekt berücksichtigt, insbesondere durch Anwendung statistischer Methoden. Die Berechnung des Gefährdungspotentials erfolgt rasch und praktisch fehlerfrei.

Die für die Planung erfassten, in der elektrischen Anlage vorgesehenen oder benötigten Bauteile umfassen insbesondere elektrische, elektromechanische und elektronische Geräte (z.B. Schaltgeräte und Sensoren) und mechanische Bauteile (z.B. Gehäuse eines Schaltschranks). Die Bauteile können weiterhin Energiequellen, wie zum Beispiel Generatoren, Transformatoren und/oder Akkumulatoren umfassen, sowie Verbraucher, zum Beispiel elektrische Maschinen (z.B. Motoren). Die Bauteile können sich in einem Gehäuse und/oder Gebäude befinden oder außerhalb davon. Auch ein gemischter Aufbau, bei dem ein Teil der elektrischen Anlage in einem Gehäuse/Gebäude und bei dem ein anderer Teil außerhalb dieses Gehäuse/Gebäude angeordnet ist, wäre natürlich möglich.

Für die Planung werden insbesondere die in der elektrischen Anlage vorgesehenen oder benötigten Bauteile berücksichtigt, es können aber auch Einrichtungen außerhalb der elektrischen Anlage berücksichtigt werden, insbesondere wenn sie das Gefährdungspotential der elektrischen Anlage beeinflussen. Dazu zählen die oben angeführten Typen von Einrichtungen, insbesondere Energiequellen.

An dieser Stelle wird ergänzend auch angemerkt, dass unter "Generatoren" im Rahmen der Erfindung nicht nur elektromechanische Generatoren, sondern beispielsweise auch Photovoltaikmodule zu verstehen sind.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn eine Maßnahme zur Verringerung des Gefährdungspotentials, welche eine Umplanung oder Rekonfiguration der elektrischen Anlage betrifft, durch den Rechner automatisch ermittelt und insbesondere auch angezeigt wird. Das heißt, für die elektrische Anlage, deren Bauteile durch den Rechner erfasst wurden, wird eine Umplanung oder Rekonfiguration vorgeschlagen. Dadurch ist eine Verringerung des Gefährdungspotentials auf einfache Weise und auch nur mit geringem Fachwissen möglich.

Vorteilhaft ist es auch, wenn die besagte Maßnahme zur Verringerung des Gefährdungspotentials durch den Rechner automatisch angewandt wird und die elektrischen Anlage automatisch umgeplant oder rekonfiguriert wird. Das heißt, die elektrische Anlage, deren Bauteile durch den Rechner erfasst wurden, wird automatisch umgeplant oder rekonfiguriert. Dadurch wird die Planung einer elektrischen Anlage mit zu hohem Gefährdungspotential automatisch ausgeschlossen. Die Planung unsicherer elektrischer Anlagen ist dadurch praktisch nicht möglich.

Besonders vorteilhaft ist es weiterhin, wenn Daten betreffend die in der geplanten elektrischen Anlage benötigten oder verwendeten Bauteile (z.B. elektrische und elektronische Geräte, elektrische Maschinen und mechanische Bauteile) durch den Rechner an ein Lagerverwaltungssystem übermittelt werden und wenn in Folge die besagten Bauteile aus einem Lager ausgelagert und an einem Ausgabeplatz zur Verfügung gestellt werden. Dadurch ist es möglich, die für den Bau der geplanten elektrischen Anlage benötigten Teile automatisch zur Verfügung zu stellen. Das Verfahren zur Planung einer elektrischen Anlage beeinflusst dabei direkt die Vorgänge im Lager. Die zur Verfügung gestellten Bauteile können vom Ausgabeplatz abgeholt werden oder über einen Versanddienst an einen Empfänger zugestellt werden. Vorteilhaft werden solche Bauteile zur Verfügung gestellt, die einen Mindestsicherheitsstandard der geplanten elektrischen Anlage verwirklichen. Die Herstellung unsicherer elektrischer Anlagen ist dadurch eigentlich nur mehr bei missbräuchlicher Nutzung des Systems möglich.

Günstig ist es, wenn als Lichtbogenenergie-Parameter
- eine Art eines in der elektrischen Anlage vorgesehenen Transformators und/oder Generators und/oder Akkumulators und/oder
- eine Impedanz der elektrischen Anlage und/oder
- eine Art eines in der elektrischen Anlage vorgesehenen Schaltgeräts und/oder
- eine Art eines in der elektrischen Anlage vorgesehenen Elements zur Lichtbogenlöschung und/oder
- einer Art einer in der elektrischen Anlage vorgesehenen, passiven, mechanischen Schutzmaßnahme, insbesondere einer Druckentlastungsklappe, vorgesehen ist.

Die Art beziehungsweise Baugröße eines in der elektrischen Anlage vorgesehenen Transformators und/oder Generators und/oder Akkumulators bestimmt unmittelbar die in die elektrische Anlage oder in Teile derselben zugeführte elektrische Leistung. Leistungsstarke Transformatoren und/oder Generatoren und/oder Akkumulatoren führen demnach zu energiereicheren Lichtbögen, leistungsschwache Transformatoren und/oder Generatoren und/oder Akkumulatoren zu energieärmeren Lichtbögen. In gleicher Weise wird die Lichtbogenenergie durch die Impedanz der elektrischen Anlage beeinflusst. Geringe Impedanz führt dabei zu energiereicheren Lichtbögen, hohe Impedanz zu energieärmeren Lichtbögen. Weiterhin wird die Lichtbogenenergie durch die Art eines in der elektrischen Anlage vorgesehenen Schaltgeräts beeinflusst. Beispielsweise kann ein Schaltgerät wirksame Maßnahmen zur Vermeidung oder Löschung eines Schaltlichtbogens aufweisen und in geschlossener oder offener Bauweise ausgeführt sein. Offene Schaltgeräte und/oder schwach wirksamen Maßnahmen zur Vermeidung oder Löschung eines Schaltlichtbogens führen demnach zu energiereicheren Lichtbögen, geschlossene Schaltgeräte und/oder stark wirksame Maßnahmen zur Vermeidung oder Lichtbogenlöschung zu energieärmeren Lichtbögen. Zusätzlich wird die Lichtbogenenergie durch eine Art eines in der elektrischen Anlage vorgesehenen Elements zur (Stör)Lichtbogenlöschung beeinflusst. Beispielsweise sind diese Elemente Schalter, die spannungsführende Pfade, zwischen denen ein Störlichtbogen brennt, kurzschließen und/oder die Energiezufuhr zu diesen Pfaden unterbrechen. Insbesondere die Zeit, die bis zum Löschen des Störlichtbogens vergeht, beeinflusst die Lichtbogenenergie. Kurze Auslösezeit führt dabei zu energieärmeren Lichtbögen, lange Auslösezeit zu energiereicheren Lichtbögen. Elemente zum Löschen eines Lichtbogens können zum Beispiel das von einem Störlichtbogen emittierte Licht auswerten oder auch einen in der elektrischen Anlage auftretenden raschen Stromanstieg. Dabei werden wiederum ein Kurzschlussschalter und/oder ein Trennschalter aktiviert um den Störlichtbogen zu löschen, wenn ein vom Störlichtbogen verursachter Stromfluss detektiert wird. Schließlich wird die Lichtbogenenergie auch durch eine Art einer in der elektrischen Anlage vorgesehenen, passiven, mechanischen Schutzmaßnahme beeinflusst, beispielsweise durch die Art verwendeter Druckentlastungsklappen. Diese mechanischen Schutzmaßnahmen leiten den in der elektrischen Anlage (z.B. in einem Schaltschrank) bei einem Lichtbogen entstehenden und durch die Erhitzung der Luft verursachten Überdruck gezielt ab. Unkontrollierte Explosionen in der elektrischen Anlage können so vermieden werden. Je wirksamer die genannten mechanischen Schutzmaßnahmen sind, umso geringer ist die auftretende Lichtbogenenergie.

Günstig ist es auch, wenn als Lichtbogenwahrscheinlichkeits-Parameter eine in der elektrischen Anlage vorgesehene
- Art der Isolation und/oder
- Art der Schottungen und Barrieren und/oder
- Art der Lichtbogen-Detektion (gegebenenfalls inkludierend eine Lichtbogen-Frühdetektion)
vorgesehen ist.

Die der in der elektrischen Anlage vorgesehenen Isolation bestimmt unmittelbar die Lichtbogenwahrscheinlichkeit, also die Eintrittswahrscheinlichkeit für das Auftreten eines Lichtbogens in der elektrischen Anlage. Je wirksamer die in der elektrischen Anlage vorgesehenen Isolation ist, umso geringer ist die Lichtbogenwahrscheinlichkeit, also das Risiko für das Auftreten eines Lichtbogens. Ein weiterer die Lichtbogenwahrscheinlichkeit beeinflussender Parameter ist durch die Art der in der elektrischen Anlage vorgesehenen Schottungen und Barrieren gegeben. Werden Bereiche in der elektrischen Anlage durch Schottungen und Barrieren gut voneinander abgetrennt, so ist die Lichtbogenwahrscheinlichkeit gering. Schließlich wird die Lichtbogenwahrscheinlichkeit auch von der Art der in der elektrischen Anlage vorgesehenen Lichtbogen-Detektion beeinflusst, also von der Art der zur Erkennung eines Lichtbogens vorgesehenen Systeme. Diese Systeme erkennen einen Lichtbogen nach Möglichkeit im Frühstadium oder im Idealfall sogar bevor dieser auftritt, etwa weil Anlagenparameter das Zünden eines Lichtbogens ankündigen (in diesem Zusammenhang wird darauf hingewiesen, dass Systeme zur "Lichtbogen-Detektion" im Rahmen der Erfindung auch eine "Lichtbogen-Frühdetetektion" umfassen können). Sind die Systeme zur Lichtbogen-Detektion sehr wirksam, dann kann die Lichtbogenwahrscheinlichkeit drastisch gesenkt werden. Beispielsweise kann die Lichtbogen-Detektion optische Sensoren umfassen, welche das vom Lichtbogen emittierte Licht auswerten, und/oder Stromsensoren, welche einen durch einen Lichtbogen verursachten, raschen Stromanstieg detektieren. Temperatursensoren können darüber hinaus nicht nur die bei einem brennenden Lichtbogen entstehende Hitze detektieren, sondern auch Hinweise auf einen sich ankündigenden Lichtbogen geben. Wird beispielsweise ein im Bereich der elektrischen Anlage auftretender Temperaturanstieg festgestellt, der nicht mit einem erhöhten Stromverbrauch korreliert, so kann dies auf sich lösende Verbindungen zwischen elektrischen Leitern (z.B. wegen sich lockernder Schrauben) hindeuten. Löst sich die genannten Verbindung weiter, so kann in weitere Folge ein Lichtbogen zwischen den (zumindest teilweise voneinander abgehobenen) Leitern gezündet werden. Desgleichen kann eine herunterfallende Schraube einen Lichtbogen auslösen. Temperatursensoren, die in der genannten Art eingesetzt werden, zählen daher zu der Lichtbogen-Frühdetetektion.

An dieser Stelle wird angemerkt, dass eine Art der Lichtbogen-Detektion, welche die Lichtbogenwahrscheinlichkeit beeinflusst, und eine Art eines in der elektrischen Anlage vorgesehenen Elements zur Lichtbogenlöschung, welche die Lichtbogenenergie beeinflusst, oft durch ein und dasselbe Gerät bestimmt wird. Ein Element zur Lichtbogenlöschung umfasst (z.B. Kurzschluss- und/oder Trennschalter) ja in aller Regel auch eine Lichtbogen-Detektion (z.B. Sensoren). Kann das Auftreten eines Lichtbogens durch die Lichtbogen-Detektion nicht rechtzeitig erkannt und damit verhindert werden, dann werden mit der Lichtbogenlöschung Maßnahmen zur Begrenzung der Lichtbogenenergie ergriffen.

Weiterhin ist es von Vorteil, wenn für jede Kombination der Lichtbogenenergie und der Lichtbogenwahrscheinlichkeit ein Gefährdungspotential in einer tabellenartigen Struktur gespeichert ist und das Gefährdungspotential für eine gegebene Kombination einer Lichtbogenenergie und einer Lichtbogenwahrscheinlichkeit anhand der tabellenartigen Struktur bestimmt wird, das heißt in dieser gesucht wird. Bei dieser Ausführungsvariante des vorgeschlagenen Verfahrens wird ein Gefährdungspotential einer elektrischen Anlage für eine gegebene Kombination Lichtbogenenergie und einer Lichtbogenwahrscheinlichkeit von spezialisierten Fachleuten ermittelt, beispielsweise durch Simulation, Berechnung oder empirischen Versuch, und in der Tabelle gespeichert. Benutzer, welche eine elektrische Anlage planen möchten, können in Folge auf einfache Weise auf diese Ergebnisse zurückgreifen.

Vorteilhaft ist es aber auch, wenn für jede Kombination eines Lichtbogenenergie-Parameters und eines Lichtbogenwahrscheinlichkeit-Parameters ein Gefährdungspotential in einer mehrdimensionalen, tabellenartigen Struktur gespeichert ist und das Gefährdungspotential für eine gegebene Kombination eines Lichtbogenenergie-Parameters und eines Lichtbogenwahrscheinlichkeits-Parameters anhand der mehrdimensionalen, tabellenartigen Struktur bestimmt wird, das heißt in dieser gesucht wird. Bei dieser Ausführungsvariante des vorgeschlagenen Verfahrens wird ein Gefährdungspotential einer elektrischen Anlage wiederum von spezialisierten Fachleuten ermittelt, nun aber für eine gegebene Kombination eines Lichtbogenenergie-Parameters und eines Lichtbogenwahrscheinlichkeit-Parameters. Die Ermittlung kann wiederum durch Simulation, Berechnung oder empirischen Versuch erfolgen, und das Ergebnis wird wiederum in der Tabelle gespeichert. Benutzer, welche eine elektrische Anlage planen möchten, können in Folge auf einfache Weise auf diese Ergebnisse zurückgreifen. Insbesondere kann die Tabelle auch mehrdimensional sein, das heißt insbesondere mehr als zwei und auch mehr als drei Dimensionen aufweisen. Dies ist dann von Vorteil, wenn mehrere Lichtbogenenergie-Parameter und Lichtbogenwahrscheinlichkeits-Parameter in Zusammenhang gebracht werden sollen.

An dieser Stelle wird angemerkt, dass sich die zum Verfahren offenbarten Varianten und daraus resultierenden Vorteile in gleicher Weise auf das offenbarte System beziehen und umgekehrt.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Darstellung einer beispielhaften elektrischen Anlage;
- Fig. 2: eine schematische Darstellung einer zweidimensionalen Tabelle für das Gefährdungspotential;
- Fig. 3: eine schematische Darstellung einer dreidimensionalen Tabelle für das Gefährdungspotential;
- Fig. 4: eine schematische Darstellung für das Gefährdungspotential samt Vorschläge zur Verringerung desselben und
- Fig. 5: eine schematische Darstellung eines beispielhaften, mit der Planungssoftware in Verbindung stehenden Lagersystems.

### DETAILIERTE BESCHREIBUNG DER ERFINDUNG

Im Folgenden werden gleiche oder ähnliche Teile in den unterschiedlichen Ausführungsformen mit gleichen oder ähnlichen Bezugszeichen und Bezeichnungen versehen werden. Die auf gleiche oder ähnliche Teile bezogene Offenbarungen sind demgemäß untereinander austauschbar. Lageangaben, wie zum Beispiel "oben", "unten", "seitlich" usw. auf die unmittelbar beschriebene sowie dargestellte Figur bezogen und bei einer Lageänderung sinngemäß auf die neue Lage zu übertragen.

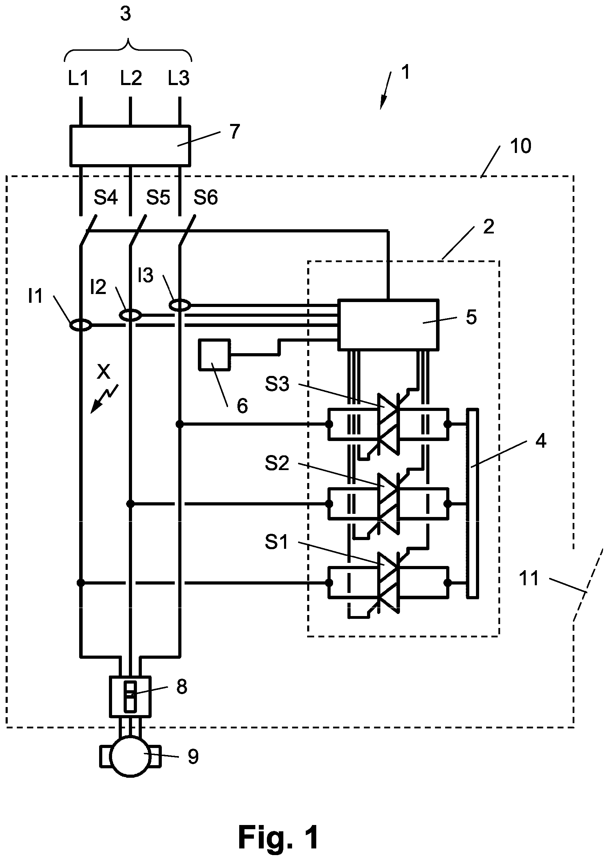

Fig. 1 zeigt eine beispielhafte elektrische Anlage 1 mit einer Lichtbogen-Löschvorrichtung 2 zum Löschen eines Lichtbogens X in einem Mehrphasensystem 3 mit Hilfe mehrerer einzeln ansteuerbarer Schalter S1..S3. Die Schalter S1..S3 sind so zwischen die Phasen L1 ..L3 des Mehrphasensystems 3 geschaltet, dass ein Kurzschlusspfad zwischen Phasen L1..L3 schaltbar ist. In dem gezeigten Beispiel sind die Schalter S1..S3 über die Verbindungsschiene 4 im Stern geschaltet. Der Sternpunkt ist in diesem Beispiel frei, er könnte aber auch mit einem (nicht dargestellten) Neutralleiter verbunden sein. Denkbar wäre aber natürlich auch, dass die Schalter S1..S3 im Dreieck geschaltet sind. Weiterhin sind die Schalter S1..S3 in dem Beispiel als Halbleiterschalter ausgebildet. Konkret weist jeder Schalter S1..S3 zwei antiparallel angeordnete Thyristoren auf, mit denen sowohl die positive als auch die negative Halbwelle eines Wechselstroms kurzgeschlossen werden können. Selbstverständlich könnten die Schalter S1..S3 auch aus anderen Halbleitern aufgebaut sein, beispielsweise aus IGBTs (Insulated Gate Bipolar Transistor), oder aber auch als (mechanische) Schaltkontakte ausgebildet sein.

Zusätzlich zu den Schaltern S1..S3 weist die Lichtbogen-Löschvorrichtung 2 eine mit den Schaltern S1..S3 verbundene Steuerung 5 auf, die dazu eingerichtet ist, einen Kurzschluss nur zwischen jenen Phasen L1..L3 zu erzeugen, zwischen denen ein Lichtbogen X detektiert wird.

In einer vorteilhaften Ausführungsvariante können mehrere Schalter der Schalter S1..S3, insbesondere alle Schalter S1..S3, in einem gemeinsamen Gehäuse eines Kurzschlussschalters angeordnet sein. Optional kann auch die Steuerung 5 in dem gemeinsamen Gehäuse angeordnet sein. Prinzipiell können die genannten Komponenten aber auch in gesonderten Gehäusen untergebracht sein.

In der Fig. 1 sind zusätzlich zu den bereits erwähnten Bauteilen mehrere mit der Steuerung 5 verbundene Stromsensoren 11..13 vorgesehen, von denen je einer je einer Phase L1..L3 zugeordnet ist. Zusätzlich ist auch ein mit der Steuerung 5 verbundener Lichtsensor 6 vorgesehen. In dem konkret dargestellten Beispiel ist nur ein einziger mit der Steuerung 5 verbundener Lichtsensor 6 vorgesehen. Vorstellbar ist aber auch, dass die Anordnung mehrere mit der Steuerung 5 verbundene Lichtsensoren 6 aufweist, von denen je einer je einer Phase L1 ..L3 zugeordnet ist.

Weiterhin sind in der Fig. 1 noch weitere von der Steuerung 5 gemeinsam angesteuerte Schalter S4..S6 vorgesehen, welche der Lichtbogen-Löschvorrichtung 2 vorgelagert sind.

Vor den Schaltern S4..S6 ist ein optionaler Transformator 7 vorgesehen, der das im Mehrphasensystem 3 vorgesehene Spannungsniveau an ein in der elektrischen Anlage 1 benötigtes Spannungsniveau anpasst. Den Schaltern S4..S6 nachgelagert ist ein optionales Schaltgerät 8 mit einem beispielhaften, daran angeschlossenen Verbraucher 9. In dem konkreten Beispiel ist der Verbraucher 9 als Motor ausgeführt. Das Schaltgerät 8 kann demzufolge als Motorschutzschalter ausgebildet sein.

Die oben erläuterte Anordnung ist in diesem Beispiel in ein Gehäuse 10 eingebaut, das eine optionale Druckentlastungsklappe 11 aufweist. Die elektrische Anlage 1 kann insbesondere als Schaltschrank ausgebildet sein, dessen Gehäuse durch das Gehäuse 10 gebildet wird. Der Transformator 7 und der Verbraucher 9 sind in dem in Fig. 1 dargestellten Beispiel außerhalb des Gehäuses 10 angeordnet, grundsätzlich könnten diese aber auch im Gehäuse 10 angeordnet sein.

Die Funktion der in der Fig. 1 dargestellten Anordnung ist nun wie folgt.

Im Normalbetrieb wird der Verbraucher 9 über das Mehrphasensystem 3 versorgt, wobei die Schalter S1..S3 offen und die Schalter S4..S6 geschlossen sind. Die Druckentlastungsklappe 11 ist ebenfalls geschlossen.

Tritt nun im Störfall beispielsweise ein zwischen den Phasen L1 und L2 brennender Lichtbogen X auf, messen die Stromsensoren I1 und I2 einen Kurzschlussstrom, welcher von der Steuerung 5 erfasst wird. Zudem wird geprüft, ob der Lichtsensor 6 ein von einem Lichtbogen herrührendes Licht detektiert. Sind beide Bedingungen erfüllt, so steuert die Steuerung 5 die beiden Schalter S1 und S2 an, um den Lichtbogen X zu löschen. Der Schalter S3 bleibt dagegen offen. Bei zwei Lichtbögen X zwischen je zwei Phasen L1..L3 oder bei Lichtbögen zwischen allen drei Phasen L1..L2 würden dagegen alle Schalter S1..S3 geschlossen werden.

Durch das Schließen der Schalter S1..S3 wird der Lichtbogen X in den/die niederimpedanten (Kurzschluss)Schalter S1..S3 gezogen, bis die Energiezufuhr unterbrochen wird. Dazu werden die vorgelagerten Schalter S4..S6 im Fehlerfall geöffnet. Dies kann, wie in der Fig. 1 dargestellt, von der Steuerung 5 übernommen werden, oder die Schalter S4..S6 werden im Falle von Überstrom durch eine autarke Steuerung geöffnet. Die Schalter S4..S6 können insbesondere als Überstromschutzschalter ausgebildet sein.

In dem vorgestellten Verfahren wurde ein Lichtbogen X mit Hilfe der Stromsensoren 11..13 und mit Hilfe des Lichtsensors 6 detektiert. Dies ist zwar vorteilhaft, jedoch nicht zwingend. Denkbar wäre auch, dass die Detektion des Lichtbogens X nur mit Hilfe der Stromsensoren 11..13 (und ohne Lichtsensor 6) erfolgt, mit Hilfe der Stromsensoren 11..13 und mehrerer Lichtsensoren 6, von denen je einer je einer Phase L1 ..L3 zugeordnet ist oder auch auf andere Weise.

insbesondere sind Detektionsverfahren vorstellbar, die ohne die Verwendung von Stromsensoren 11 ..13 auskommen und die Detektion eines Lichtbogens X mit einem Lichtsensor 6 oder mehreren Lichtsensoren 6 vornehmen. Denkbar wäre auch, dass ein sich ankündigender Lichtbogen X mit einem Temperatursensor detektiert wird, welcher einen Temperaturanstieg auswertet. Wird beispielsweise ein Temperaturanstieg festgestellt, der nicht mit einem erhöhten Stromverbrauch korreliert, so kann dies auf sich lösende Verbindungen zwischen elektrischen Leitern hindeuten, zwischen denn in weiterer Folge ein Lichtbogen X gezündet werden kann.

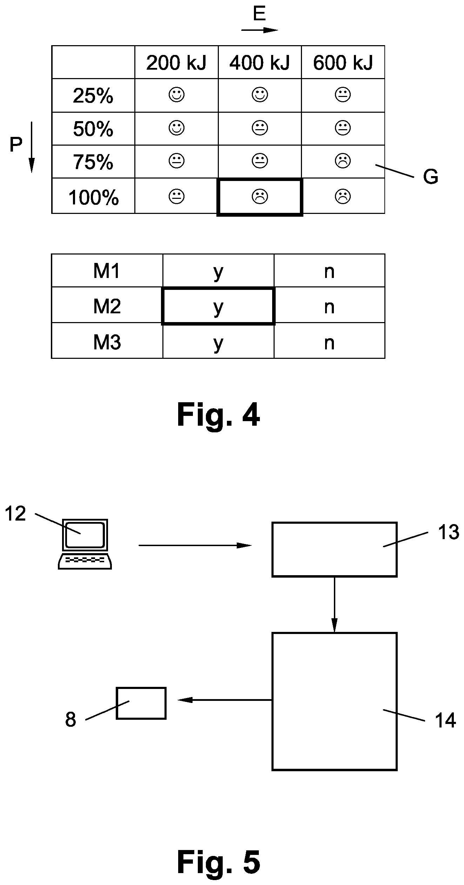

Bei der Planung der elektrischen Anlage 1 werden durch einen Rechner 12 (siehe hierzu auch Fig. 5) nun Bauteile erfasst, die in der elektrischen Anlage 1 vorgesehen oder benötigt sind. Diese Bauteile umfassen z.B. elektrische und elektronische Geräte, elektrische Maschinen und mechanische Bauteile. In dem in der Fig. 1 dargestellten Beispiel können die in der elektrischen Anlage 1 vorgesehen oder benötigten Bauteile konkret die Lichtbogen-Löschvorrichtung 2, das Mehrphasensystem 3, die Verbindungsschiene 4, die Steuerung 5, den Lichtsensor 6, den Transformator 7, das Schaltgerät 8, den Verbraucher 9, das Gehäuse 10, die Druckentlastungsklappe 11 umfassen.

An dieser Stelle wird angemerkt, dass in einer elektrischen Anlage 1 im Allgemeinen entweder Einrichtungen zum Detektieren und Löschen eines Lichtbogens X verwendet werden (Steuerung 5, Stromsensoren I1..I3, Lichtsensoren 6, Schalter S1..S6) oder eine Druckentlastungsklappe 11, welche das Entstehen eines Lichtbogens X zwar nicht verhindert, die durch den Lichtbogen X entstehende Energie (insbesondere Hitze und Druck) in einen nicht kritischen Bereich ableitet. Beispielsweise kann die Energie über ein Dach ins Freie geleitet werden. Grundsätzlich können in einer elektrischen Anlage 1 sowohl Maßnahmen zum Detektieren und Löschen eines Lichtbogens X, als auch Maßnahmen zum Ableiten der durch einen Lichtbogens X verursachten Energie verbaut sein. Die Maßnahmen zum Ableiten der durch einen Lichtbogens X verursachten Energie werden in diesem Fall insbesondere dann wirksam, wenn die Maßnahmen zum Detektieren und Löschen eines Lichtbogens X versagen.

In Folge wird ein Gefährdungspotential G durch den Rechner 12 automatisch ermittelt und angezeigt. Das Gefährdungspotential G wird konkret
- anhand einer voraussichtlichen Lichtbogenenergie E in der elektrischen Anlage 1 ermittelt, welche die Energie eines in der elektrischen Anlage 1 auftretenden Lichtbogens X angibt und insbesondere aus dem zumindest einen Lichtbogenenergie-Parameter Y_{E1}, Y_{E2} bestimmt wird, und
- anhand einer voraussichtlichen Lichtbogenwahrscheinlichkeit P, welche die Eintrittswahrscheinlichkeit für das Auftreten eines Lichtbogens X in der elektrischen Anlage 1 angibt und insbesondere aus dem zumindest einen Lichtbogenwahrscheinlichkeits-Parameter Y_{P} bestimmt wird.

Das Gefährdungspotential G kann für die elektrische Anlage 1 selbst und/oder für eine in oder in der Nähe der elektrischen Anlage G befindliche Person ermittelt werden.

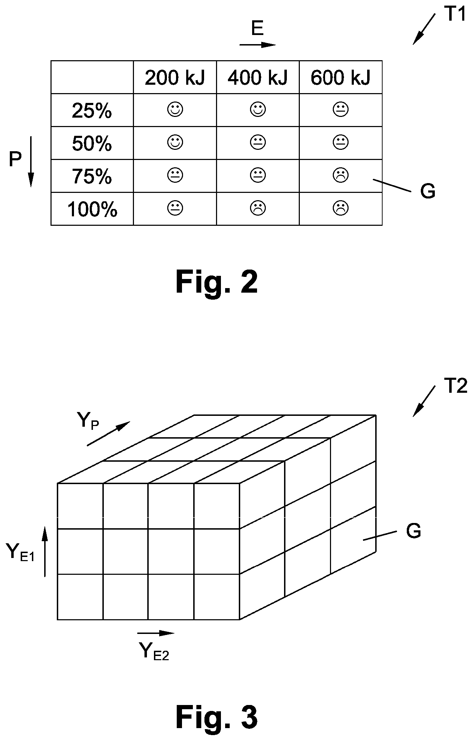

In einem in Fig. 2 dargestellten Beispiel ist für jede Kombination der Lichtbogenenergie E und der Lichtbogenwahrscheinlichkeit P ein Gefährdungspotential G in einer tabellenartigen Struktur T1 gespeichert.

Beispielsweise ist die Lichtbogenenergie E von 200 kJ bis 600 kJ in den Spalten der Tabelle T1 gespeichert und die Lichtbogenwahrscheinlichkeit P von 25% bis 100% ist in den Zeilen der Tabelle T1 gespeichert. In den Zellen der Tabelle T1 ist schließlich ein Gefährdungspotential G in Form von drei Stufen eingetragen, wobei das Symbol " 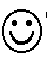 " ein niedriges Gefährdungspotential G kennzeichnet, das Symbol " 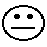 " ein mittleres Gefährdungspotential G und das Symbol " 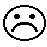 " ein hohes Gefährdungspotential G. Selbstverständlich können auch andere Symbole gewählt werden, beispielsweise die Farben eines Ampelsystems, oder es können auch nummerische Werte für das Gefährdungspotential G vorgesehen sein. Zudem ist die Anzahl der Spalten und Zeilen rein illustrativ, und es können auch mehr Spalten und Zeilen vorgesehen sein. Desweiteren können auch mehr oder weniger Stufen für die Angabe des Gefährdungspotentials G vorgesehen sein.

Das einer gegebenen Kombination von Lichtbogenenergie E und Lichtbogenwahrscheinlichkeit P zugeordnete Gefährdungspotential G einer elektrischen Anlage 1 kann beispielsweise von spezialisierten Fachleuten ermittelt werden, beispielsweise durch Simulation, Berechnung oder empirischen Versuch, und in der Tabelle T1 gespeichert werden. Bei der Planung der elektrischen Anlage 1 wird das Gefährdungspotential G für eine gegebene Kombination einer Lichtbogenenergie E und einer Lichtbogenwahrscheinlichkeit P anhand der tabellenartigen Struktur T1 bestimmt, das heißt in Tabelle T1 gesucht. Benutzer, welche eine elektrische Anlage 1 planen möchten, können so auf einfache Weise auf diese Ergebnisse zurückgreifen.

Durch die vorgeschlagenen Maßnahmen kann ein hohes Gefährdungspotential G einer elektrischen Anlage 1 schon im Planungsstadium auf einfache Weise erkannt werden. Unfälle, bei denen Einrichtungen 2, 4..9 in der elektrischen Anlage 1 beschädigt werden und/oder bei denen Personen, die sich in oder in der Nähe der elektrischen Anlage 1 aufhalten, können dadurch weitgehend vermieden werden.

Das Gefährdungspotential G kann für den Normalbetrieb der elektrischen Anlage 1 und/oder für den Wartungsfall der elektrischen Anlage 1 und/oder für den Störfall der elektrischen Anlage 1 ermittelt werden. Der das Gefährdungspotential G bestimmende Lichtbogen kann insbesondere ein Schaltlichtbogen (Normalbetrieb) oder ein Störlichtbogen X (Störfall) sein. Weiterhin kann das Gefährdungspotential G für den Wartungsfall der elektrischen Anlage 1 bestimmt werden, bei dem beispielsweise Türen eines Schaltschranks geöffnet und nicht wie im Normalbetrieb geschlossen sind. Dadurch besteht im Wartungsfall in der Regel ein höheres Gefährdungspotential G.

Die Lichtbogenenergie E in der elektrischen Anlage 1 kann mit Hilfe zumindest eines Lichtbogenenergie-Parameters Y_{E1}, Y_{E2} bestimmt werden Beispiele für Lichtbogenenergie-Parameter Y_{E1}, Y_{E2} sind:
- eine Art eines in der elektrischen Anlage 1 vorgesehenen Transformators 7 und/oder Generators und/oder Akkumulators und/oder
- eine Impedanz der elektrischen Anlage 1 und/oder
- eine Art eines in der elektrischen Anlage 1 vorgesehenen Schaltgeräts 8 und/oder
- eine Art eines in der elektrischen Anlage 1 vorgesehenen Elements 2 zur Lichtbogenlöschung und/oder
- einer Art einer in der elektrischen Anlage 1 vorgesehenen, passiven, mechanischen Schutzmaßnahme 10. 11, insbesondere einer Druckentlastungsklappe.

Die Art beziehungsweise Baugröße eines in der elektrischen Anlage 1 vorgesehenen Transformators 7 und/oder Generators und/oder Akkumulators bestimmt unmittelbar die in die elektrische Anlage 1 oder in Teile derselben zugeführte elektrische Leistung. Leistungsstarke Transformatoren 7 und/oder Generatoren und/oder Akkumulatoren führen demnach zu energiereicheren Lichtbögen X, leistungsschwache Transformatoren 7 und/oder Generatoren zu und/oder Akkumulatoren energieärmeren Lichtbögen X. In gleicher Weise wird die Lichtbogenenergie E durch die Impedanz der elektrischen Anlage 1 beeinflusst. Geringe Impedanz führt dabei zu energiereicheren Lichtbögen X, hohe Impedanz zu energieärmeren Lichtbögen X. Weiterhin wird die Lichtbogenenergie E durch die Art eines in der elektrischen Anlage 1 vorgesehenen Schaltgeräts 8 beeinflusst. Beispielsweise kann ein Schaltgerät 8 wirksame Maßnahmen zur Vermeidung oder Löschung eines Schaltlichtbogens aufweisen und in geschlossener oder offener Bauweise ausgeführt sein. Offene Schaltgeräte 8 und/oder schwach wirksame Maßnahmen zur Vermeidung oder Löschung eines Schaltlichtbogens führen demnach zu energiereicheren Lichtbögen, Geschlossene Schaltgeräte 8 und/oder stark wirksame Maßnahmen zur Vermeidung oder Löschung eines Schaltlichtbogens führen zu energieärmeren Lichtbögen. Zusätzlich wird die Lichtbogenenergie E durch eine Art eines in der elektrischen Anlage 1 vorgesehenen Elements 2 zur Lichtbogenlöschung beeinflusst. Beispielsweise sind diese Elemente 2 Schalter, die spannungsführende Pfade, zwischen denen ein Störlichtbogen X brennt, kurzschließen (siehe die Schalter S1..S3) und/oder die Energiezufuhr zu diesen Pfaden unterbrechen (siehe die Schalter S4..S6). Insbesondere die Zeit, die bis zum Löschen des Störlichtbogens X vergeht, beeinflusst die Lichtbogenenergie E. Kurze Auslösezeit führt dabei zu energieärmeren Lichtbögen X, lange Auslösezeit zu energiereicheren Lichtbögen X. Elemente 2 zum Löschen eines Lichtbogens X können zum Beispiel das von einem Störlichtbogen emittierte Licht auswerten (siehe den Lichtsensor 6) oder auch einen in der elektrische Anlage 1 auftretenden raschen Stromanstieg (siehe Stromsensoren 11..13). Dabei werden ein Kurzschlussschalter S1..S3 und/oder ein Trennschalter S4..S6 aktiviert, um den Störlichtbogen X zu löschen, wenn ein vom Störlichtbogen X verursachter Stromfluss detektiert wird. Schließlich wird die Lichtbogenenergie E auch durch eine Art einer in der elektrischen Anlage 1 vorgesehenen, passiven, mechanischen Schutzmaßnahme beeinflusst, beispielsweise durch die Art verwendeter Druckentlastungsklappen 11. Diese mechanischen Schutzmaßnahmen 11 leiten den in der elektrischen Anlage 1 (z.B. in einem Schaltschrank) bei einem Lichtbogen X entstehenden und durch die Erhitzung der Luft verursachten Überdruck gezielt ab. Unkontrollierte Explosionen in der elektrischen Anlage 1 können so vermieden werden. Je wirksamer die genannten mechanischen Schutzmaßnahmen sind, umso geringer ist die auftretende Lichtbogenenergie E.

Die Lichtbogenwahrscheinlichkeit P in der elektrischen Anlage 1 kann mit Hilfe zumindest einen Lichtbogenwahrscheinlichkeits-Parameter Y_{P} bestimmt werden Beispiele für Lichtbogenwahrscheinlichkeits-Parameter Y_{P} sind:
eine der elektrischen Anlage 1 vorgesehene
- Art der Isolation und/oder
- Art der Schottungen und Barrieren und/oder
- Art der Lichtbogen-Detektion 5, 6, I1..I3.

Die der in der elektrischen Anlage 1 vorgesehenen Isolation bestimmt unmittelbar die Lichtbogenwahrscheinlichkeit P, also die Eintrittswahrscheinlichkeit für das Auftreten eines Lichtbogens X in der elektrischen Anlage 1. Je wirksamer die in der elektrischen Anlage 1 vorgesehenen Isolation ist, umso geringer ist die Lichtbogenwahrscheinlichkeit P, also das Risiko für das Auftreten eines Lichtbogens X. Ein weiterer die Lichtbogenwahrscheinlichkeit P beeinflussender Parameter ist durch die Art der in der elektrischen Anlage 1 vorgesehenen Schottungen und Barrieren gegeben. Werden Bereiche in der elektrischen Anlage 1 durch Schottungen und Barrieren gut voneinander abgetrennt, so ist die Lichtbogenwahrscheinlichkeit P gering. Schließlich wird die Lichtbogenwahrscheinlichkeit P auch von der Art der in der elektrischen Anlage 1 vorgesehenen Lichtbogen-Detektion, also der Art der zur Erkennung eines Lichtbogens X vorgesehenen Systeme 5, 6, I1..I3, beeinflusst. Diese Systeme 5, 6, I1..I3 erkennen einen Lichtbogen X nach Möglichkeit im Frühstadium oder im Idealfall sogar bevor dieser auftritt, etwa weil Anlagenparameter das Zünden eines Lichtbogens X ankündigen (Lichtbogen-Frühdetektion). Sind die Systeme 5, 6, 11..13 zur Lichtbogen-Detektion sehr wirksam, dann kann die Lichtbogenwahrscheinlichkeit P drastisch gesenkt werden.

An dieser Stelle wird angemerkt, dass eine Art der Lichtbogen-Detektion 5, 6, 11..13, welche die Lichtbogenwahrscheinlichkeit P beeinflusst, und eine Art eines in der elektrischen Anlage 1 vorgesehenen Elements 5, S1...S6 zur Lichtbogenlöschung, welche die Lichtbogenenergie E beeinflusst, oft durch ein und dasselbe Gerät oder System bestimmt wird (siehe in der Fig. 1 das durch die Steuerung 5, den Lichtsensor 6, die Stromsensoren I1..I3 und die Schalter S1..S6 gebildete System).

Ein Element 5, S1 ...S6 zur Lichtbogenlöschung benötigt ja in aller Regel auch eine Lichtbogen-Detektion 5, 6, I1..I3, so wie das in der Fig. 1 der Fall ist. Kann das Auftreten eines Lichtbogens X durch die Lichtbogen-Detektion 5, 6, 11..13 nicht rechtzeitig erkannt und damit verhindert werden, dann werden mit der Lichtbogenlöschung 5, S1...S6 Maßnahmen zur Begrenzung der Lichtbogenenergie E ergriffen.

In dem obigen Beispiel wurde das Gefährdungspotential G anhand einer voraussichtlichen Lichtbogenenergie E und anhand einer voraussichtlichen Lichtbogenwahrscheinlichkeit P ermittelt und angezeigt. Die Lichtbogenenergie E und die Lichtbogenwahrscheinlichkeit P hängen, wie oben gezeigt, von Lichtbogenenergie-Parametern Y_{E1}, Y_{E2} und Lichtbogenwahrscheinlichkeits-Parametern Y_{P} ab.

Die Ermittlung eines Gefährdungspotential G kann aber auch direkt
- anhand zumindest eines Lichtbogenenergie-Parameters Y_{E1}, Y_{E2} der elektrischen Anlage 1 und
- anhand zumindest eines Lichtbogenwahrscheinlichkeits-Parameters Y_{P} der elektrischen Anlage 1
erfolgen.

Beispielsweise kann für jede Kombination eines Lichtbogenenergie-Parameters Y_{E1}, Y_{E2} und eines die Lichtbogenwahrscheinlichkeit-Parameters Y_{P} ein Gefährdungspotential G in einer mehrdimensionalen, tabellenartigen Struktur T2 gespeichert sein, so wie das in der Fig. 3 symbolhaft dargestellt ist. Die Tabelle T2 hat in diesem Beispiel drei Dimensionen, sie könnte aber auch bloß zwei Dimensionen aufweisen oder mehr als drei Dimensionen.

Das einer gegebenen Kombination von Lichtbogenenergie-Parametern Y_{E1}, Y_{E2} und Lichtbogenwahrscheinlichkeits-Parametern Y_{P} zugeordnete Gefährdungspotential G einer elektrischen Anlage 1 kann beispielsweise wiederum von spezialisierten Fachleuten ermittelt werden, etwa durch Simulation, Berechnung oder empirischen Versuch, und in der Tabelle T2 gespeichert werden. Bei der Planung der elektrischen Anlage 1 wird das Gefährdungspotential G für eine gegebene Kombination von Lichtbogenenergie-Parametern Y_{E1}, Y_{E2} und Lichtbogenwahrscheinlichkeits-Parametern Y_{P} anhand der tabellenartigen Struktur T2 bestimmt, das heißt in Tabelle T2 gesucht. Weniger erfahrene Benutzer, welche eine elektrische Anlage 1 planen möchten, können so wiederum auf einfache Weise auf diese Ergebnisse zurückgreifen.

Auch auf diese Weise kann ein hohes Gefährdungspotential G einer elektrischen Anlage 1 schon im Planungsstadium auf einfache Weise erkannt werden. Unfälle, bei denen Einrichtungen 2, 4..9 in der elektrischen Anlage 1 beschädigt werden und/oder bei denen Personen, die sich in oder in der Nähe der elektrischen Anlage 1 aufhalten, können dadurch weitgehend vermieden werden.

Fig. 4 zeigt nun ein Beispiel, bei dem ein Gefährdungspotential G nicht nur angezeigt wird (hier hohes Gefährdungspotential " 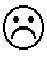 " bedingt durch eine Lichtbogenenergie E=400 kJ bei einer Lichtbogenwahrscheinlichkeit P=100%), sondern auch Maßnahmen zur Verringerung des Gefährdungspotentials G, welche eine Umplanung oder Rekonfiguration der elektrischen Anlage 1 betreffen, durch den Rechner 12 automatisch ermittelt und auch angezeigt werden.

In dem dargestellten Beispiel sind drei Maßnahmen M1..M3 vorgeschlagen. Beispielsweise kann die Maßnahme M1 die Verwendung eines anderen Transformators 7, die Maßnahme M2 die Verbesserung der Isolation der elektrischen Anlage 1 und die Maßnahme M3 die Verwendung einer Druckentlastungsklappe 11 bedeuten.

Dem Benutzer wird vorgeschlagen, eine oder mehrere der genannten Maßnahmen M1..M3 durch Wahl von "y" anzuwenden oder durch Wahl von "n" abzulehnen. Im gezeigten Beispiel wählt der Benutzer die Maßnahme M2 aus. In Folge wird das Gefährdungspotential G für die geänderte elektrische Anlage 1 ermittelt und angezeigt.

Dieser Ablauf kann beliebig oft wiederholt werden, so lange bis die elektrische Anlage 1 ein den Benutzer zufriedenstellendes Gefährdungspotential G aufweist. Durch die vorgeschlagenen Maßnahmen M1..M3 ist eine Verringerung des Gefährdungspotentials auf einfache Weise und auch nur mit geringem Fachwissen möglich.

Im gezeigten Beispiel kann der Benutzer aus einer Anzahl an vorgeschlagenen Maßnahmen M1..M3 auswählen. Denkbar ist aber auch, dass eine Maßnahme M1..M3 oder auch mehrere zur Verringerung des Gefährdungspotentials G, welche eine Umplanung oder Rekonfiguration der elektrischen Anlage 1 betrifft/betreffen, durch den Rechner 12 automatisch angewandt wird/werden. Dadurch wird die Planung einer elektrischen Anlage 1 mit zu hohem Gefährdungspotential G automatisch ausgeschlossen. Die Planung unsicherer elektrischer Anlagen 1 ist dadurch praktisch nicht möglich.

In einer weiteren Variante des vorgeschlagenen Verfahrens, das schematisch in Fig. 5 dargestellt ist, ist vorgesehen, dass Daten betreffend die in der geplanten elektrischen Anlage 1 benötigten oder verwendeten Bauteile 2..11, S1..S6, 11..13 von einem Rechner 12, auf dem die Planungssoftware ausgeführt wird, an ein Lagerverwaltungssystem 13 übermittelt werden. In Folge werden die besagten Bauteile 2..11, S1..S6, 11..13 aus einem Lager 14 ausgelagert und an einem Ausgabeplatz zur Verfügung gestellt werden (in der Fig. 5 ist dazu stellvertretend das Schaltgerät 8 dargestellt). Dadurch ist es möglich, die für den Bau der geplanten elektrischen Anlage 1 benötigten Bauteile 2..11, S1..S6, I1..I3 automatisch zur Verfügung zu stellen. Das Verfahren zur Planung einer elektrischen Anlage 1 beeinflusst dabei direkt die Vorgänge im Lager 14. Die zur Verfügung gestellten elektrischen Geräte 8 können vom Ausgabeplatz abgeholt werden oder über einen Versanddienst an einen Empfänger zugestellt werden. Vorteilhaft werden solche Bauteile 2..11, S1 ..S6, 11..13 zur Verfügung gestellt, die einen Mindestsicherheitsstandard der geplanten elektrischen Anlage 1 verwirklichen. Die Herstellung unsicherer elektrischer Anlagen 1 ist dadurch eigentlich nur mehr bei missbräuchlicher Nutzung des Systems möglich. Selbstverständlich ist es nicht zwingend, dass alle für den Bau der elektrischen Anlage 1 aus dem Lager 14 ausgelagert werden, sondern es kann auch nur ein Teil davon aus dem Lager 14 ausgelagert werden.

Abschließend wird angemerkt, dass die dargestellten Vorrichtungen respektive deren Bauteile nicht notwendigerweise maßstäblich wiedergegeben sind und diese daher auch andere Proportionen aufweisen können. Weiterhin können die dargestellten Vorrichtungen auch mehr oder weniger Bauteile als dargestellt umfassen. Schließlich wird angemerkt, dass sich die obigen Ausgestaltungen und Weiterbildungen der Erfindung auf beliebige Art und Weise im Rahmen des Schutzumfangs der nachfolgenden Ansprüche kombinieren lassen.

### Bezugszeichenliste

- 1: elektrische Anlage
- 2: Lichtbogen-Löschvorrichtung
- 3: Mehrphasensystem
- 4: Verbindungsschiene
- 5: Steuerung

- 6: Lichtsensor
- 7: Transformator
- 8: Schaltgerät
- 9: Verbraucher (Motor)
- 10: Gehäuse

- 11: Druckentlastungsklappe
- 12: Rechner mit Planungssoftware
- 13: Lagerverwaltungssystem
- 14: Lager

- E: Lichtbogenenergie
- G: Gefährdungspotential
- I1..I3: Stromsensor
- M1..M3: Maßnahme zur Verringerung des Gefährdungspotentials
- P: Lichtbogenwahrscheinlichkeit

- S1..S3: (Kurzschluss)Schalter
- S4..S6: (Trenn)Schalter
- T1, T2: Tabelle
- X: Lichtbogen
- Y_{E1}, Y_{E2}: Lichtbogenenergie-Parameter
- Y_{P}: Lichtbogenwahrscheinlichkeits-Parameter

## Patentansprüche

1. Verfahren zur rechnergestützten Planung einer elektrischen Anlage (1), bei dem
- Bauteile (2..11, S1..S6, I1..I3), die in der elektrischen Anlage (1) vorgesehen sind, durch einen Rechner (12) erfasst werden und
- ein Gefährdungspotential (G) anhand zumindest eines Lichtbogenenergie-Parameters (Y_{E1}, Y_{E2}) der elektrischen Anlage (1) oder anhand einer voraussichtlichen Lichtbogenenergie (E) in der elektrischen Anlage (1), welche die Energie eines in der elektrischen Anlage (1) auftretenden Lichtbogens (X) angibt und die aus dem zumindest einen Lichtbogenenergie-Parameter (Y_{E1}, Y_{E2}) bestimmt wird, durch den Rechner (12) ermittelt und angezeigt wird, **dadurch gekennzeichnet, dass**
- für die Ermittlung des Gefährdungspotentials (G) zusätzlich zumindest ein Lichtbogenwahrscheinlichkeits-Parameter (Y_{P}) der elektrischen Anlage (1) oder eine voraussichtliche Lichtbogenwahrscheinlichkeit (P), welche die Eintrittswahrscheinlichkeit für das Auftreten eines Lichtbogens (X) in der elektrischen Anlage (1) angibt und der aus dem zumindest einen Lichtbogenwahrscheinlichkeits-Parameter (Y_{P}) bestimmt wird, durch den Rechner (12) herangezogen wird.

2. Verfahren nach Anspruch 1, **dadurch gekennzeichnet, dass** eine Maßnahme (M1..M3) zur Verringerung des Gefährdungspotentials (G), welche eine Umplanung oder Rekonfiguration der elektrischen Anlage (1) betrifft, durch den Rechner (12) automatisch ermittelt wird.

3. Verfahren nach Anspruch 2, **dadurch gekennzeichnet, dass** die besagte Maßnahme (M1..M3) zur Verringerung des Gefährdungspotentials (G) durch den Rechner (12) automatisch angewandt und die elektrische Anlage (1) automatisch umgeplant oder rekonfiguriert wird.

4. Verfahren nach einem der Ansprüche 1 bis 3, **dadurch gekennzeichnet, dass** das Gefährdungspotential (G) für den Normalbetrieb der elektrischen Anlage (1) und/oder für den Wartungsfall der elektrischen Anlage (1) und/oder für den Störfall der elektrischen Anlage (1) ermittelt wird.

5. Verfahren nach einem der Ansprüche 1 bis 4, **dadurch gekennzeichnet, dass** Daten betreffend die in der geplanten elektrischen Anlage (1) benötigten oder verwendeten Bauteile (2..11, S1..S6, I1..I3) durch den Rechner (12) an ein Lagerverwaltungssystem (13) übermittelt werden und dass in Folge die besagten Bauteile (2..11, S1 ..S6, I1..I3) aus einem Lager (14) ausgelagert und an einem Ausgabeplatz zur Verfügung gestellt werden.

6. Verfahren nach einem der Ansprüche 1 bis 5, **dadurch gekennzeichnet, dass** als Lichtbogenenergie-Parameter (Y_{E1}, Y_{E2})
- eine Art eines in der elektrischen Anlage (1) vorgesehenen Transformators (7) und/oder Generators und/oder Akkumulators und/oder
- eine Impedanz der elektrischen Anlage (1) und/oder
- eine Art eines in der elektrischen Anlage (1) vorgesehenen Schaltgeräts (8) und/oder
- eine Art eines in der elektrischen Anlage (1) vorgesehenen Elements (5, S1..S6) zur Lichtbogenlöschung und/oder
- einer Art einer in der elektrischen Anlage (1) vorgesehenen, passiven, mechanischen Schutzmaßnahme (10, 11)
vorgesehen ist.

7. Verfahren nach einem der Ansprüche 1 bis 6, **dadurch gekennzeichnet, dass** als Lichtbogenwahrscheinlichkeits-Parameter (Y_{P}) eine der elektrischen Anlage (1) vorgesehene
- Art der Isolation und/oder
- Art der Schottungen und Barrieren und/oder
- Art der Lichtbogen-Detektion (5, 6, I1..I3)
vorgesehen ist.

8. Verfahren nach einem der Ansprüche 1 bis 7, **dadurch gekennzeichnet, dass** für jede Kombination der Lichtbogenenergie (E) und der Lichtbogenwahrscheinlichkeit (P) ein Gefährdungspotential (G) in einer tabellenartigen Struktur (T1) gespeichert ist und das Gefährdungspotential (G) für eine gegebene Kombination Lichtbogenenergie (E) und einer Lichtbogenwahrscheinlichkeit (P) anhand der tabellenartigen Struktur (T1) bestimmt wird.

9. Verfahren nach einem der Ansprüche 1 bis 7, **dadurch gekennzeichnet, dass** für jede Kombination eines Lichtbogenenergie-Parameters (Y_{E1}, Y_{E2}) und eines die Lichtbogenwahrscheinlichkeit-Parameters (Y_{P}) ein Gefährdungspotential (G) in einer mehrdimensionalen, tabellenartigen Struktur (T2) gespeichert ist und das Gefährdungspotential (G) für eine gegebene Kombination eines Lichtbogenenergie-Parameters (Y_{E1}, Y_{E2}) und eines Lichtbogenwahrscheinlichkeits-Parameters (Y_{P}) anhand der mehrdimensionalen, tabellenartigen Struktur bestimmt (T2) wird.

10. Verfahren nach einem der Ansprüche 1 bis 9, **dadurch gekennzeichnet, dass** das Gefährdungspotential (G) für die elektrische Anlage (1) selbst und für eine in oder in der Nähe der elektrischen Anlage (G) befindliche Person ermittelt wird.

11. System zur rechnergestützten Planung einer elektrischen Anlage (1), umfassend einen Rechner (12), der dazu eingerichtet ist,
- Bauteile (2..11, S1..S6, I1..I3), die in der elektrischen Anlage (1) vorgesehen sind, zu erfassen und
- ein Gefährdungspotential (G) anhand zumindest eines Lichtbogenenergie-Parameters (Y_{E1}, Y_{E2}) der elektrischen Anlage (1) oder anhand einer voraussichtlichen Lichtbogenenergie (E) in der elektrischen Anlage (1), welche die Energie eines in der elektrischen Anlage (1) auftretenden Lichtbogens (X) angibt und die aus dem zumindest einen Lichtbogenenergie-Parameter (Y_{E1}, Y_{E2}) bestimmt wird, zu ermitteln und anzuzeigen,
**dadurch gekennzeichnet, dass**
- der Rechner (12) weiter dazu eingerichtet ist, für die Ermittlung des Gefährdungspotentials (G) zusätzlich zumindest einen Lichtbogenwahrscheinlichkeits-Parameter (Y_{P}) der elektrischen Anlage (1) oder eine voraussichtliche Lichtbogenwahrscheinlichkeit (P), welche die Eintrittswahrscheinlichkeit für das Auftreten eines Lichtbogens (X) in der elektrischen Anlage (1) angibt und der aus dem zumindest einen Lichtbogenwahrscheinlichkeits-Parameter (Y_{P}) bestimmt wird, heranzuziehen.

12. Computerprogrammprodukt mit einem darauf gespeicherten Computerprogramm, das in/auf den Rechner (12) eines Systems nach Patentanspruch 11 ladbar ist und dort ein Verfahren nach einem der Ansprüche 1 bis 10 ausführt, wenn das Computerprogramm dort ausgeführt wird.

## Claims

1. Method for the computer-aided planning of an electrical system (1), in which
- components (2..11, S1 ..S6, I1..I3), which are provided in the electrical system (1), are detected by a computer (12) and
- a hazard potential (G) is determined and displayed by the computer (12) based on at least one arc-energy parameter (Y_{E1}, Y_{E2}) of the electrical system (1) or on the basis of an expected arc energy (E) in the electrical system (1), which specifies the energy of an arc (X) occurring in the electrical system (1) and which is determined from the at least one arc-energy parameter (Y_{E1}, y_{E2}),
**characterized in that**
- for determining the hazard potential (G), additionally at least one arc probability parameter (Y_{P}) of the electrical system (1) or an expected arc probability (P), which indicates the probability of occurrence of an arc (X) in the electrical system (1) and which is determined from the at least one arc probability parameter (Y_{P}), is used by the computer (12).

2. Method according to Claim 1, **characterized in that** a measure (M1..M3) for reducing the hazard potential (G), which relates to a replanning or reconfiguration of the electrical system (1), is automatically determined by the computer (12).

3. Method according to Claim 2, **characterized in that** said measure (M1..M3) for reducing the hazard potential (G) is automatically applied by the computer (12) and the electrical system (1) is automatically replanned or reconfigured.

4. Method according to any one of Claims 1 to 3, **characterized in that** the hazard potential (G) is determined for the normal operation of the electrical system (1) and/or for the case of maintenance of the electrical system (1) and/or for the case of malfunctioning of the electrical system (1).

5. Method according to any one of Claims 1 to 4, **characterized in that** data relating to the components (2..11, S1 ..S6, I1..I3) required or used in the planned electrical system (1) are transmitted by the computer (12) to a warehouse management system (13), and the aforementioned components (2..11, S1..S6, I1..I3) are subsequently retrieved from a warehouse (14) and made available at an output location.

6. Method according to any one of Claims 1 to 5, **characterized in that** provided as arc-energy parameter (Y_{E1}, Y_{E2}) are
- a type of transformer (7) and/or generator and/or rechargeable battery provided in the electrical system (1) and/or
- an impedance of the electrical system (1) and/or
- a type of switching device (8) provided in the electrical system (1) and/or
- a type of an element (5, S1..S6) provided in the electrical system (1) for arc quenching and/or
- a type of a passive mechanical protective measure (10, 11) provided in the electrical system (1).

7. Method according to any one of Claims 1 to 6, **characterized in that** provided as arc probability parameter (Y_{P}) there is provided to the electrical system (1) a
- type of insulation and/or
- type of bulkheads and barriers and/or
- type of arc detection (5, 6, i1..I3).

8. Method according to any one of Claims 1 to 7, **characterized in that** for each combination of the arc energy (E) and the arc probability (P), a hazard potential (G) is stored in a tabular structure (T1) and the hazard potential (G) is determined for a given combination of an arc energy (E) and an arc probability (P) on the basis of the tabular structure (T1).

9. Method according to any one of Claims 1 to 7, **characterized in that** for each combination of an arc-energy parameter (Y_{E1}, Y_{E2}) and of an arc probability parameter (Y_{P}) a hazard potential (G) is stored in a multidimensional, tabular structure (T2) and the hazard potential (G) for a given combination of an arc-energy parameter (Y_{E1}, Y_{E2}) and of an arc probability parameter (YP) is determined using the multidimensional, tabular structure (T2).

10. Method according to any one of Claims 1 to 9, **characterized in that** the hazard potential (G) is determined for the electrical system (1) itself and for a person located within or in the vicinity of the electrical system (G).

11. System for the computer-aided planning of an electrical system (1), comprising a computer (12), which is configured to
- detect components (2..11, S1 ..S6, I1..I3), which are provided in the electrical system (1), and
- determine and display a hazard potential (G) on the basis of at least one arc-energy parameter (Y_{E1}, Y_{E2}) of the electrical system (1) or on the basis of an expected arc energy (E) in the electrical system (1), which specifies the energy of an arc (X) occurring in the electrical system (1) and which is determined from the at least one arc-energy parameter (Y_{E1}, Y_{E2} ),
**characterized in that**
- the computer (12), in order to determine the hazard potential (G), is further configured to use at least one arc probability parameter (Y_{P}) of the electrical system (1) or an expected arc probability (P), which indicates the probability of the occurrence of an arc (X) in the electrical system (1) and which is determined from the at least one arc probability parameter (Y_{P}).

12. Computer program product having a computer program stored thereon, which is loadable in/onto the computer (12) of a system according to Claim 11 and executes a method according to any one of Claims 1 to 10 there when the computer program is executed.

## Revendications

1. Procédé pour la planification assistée par ordinateur d'une installation électrique (1), dans lequel
- des composants (2..11, S1 ..S6, 11..13), qui sont prévus dans l'installation électrique (1), sont détectés par un ordinateur (12) et
- un potentiel de risque (G) est déterminé par l'ordinateur (12), au moyen d'au moins un paramètre d'énergie d'arc (Y_{E1}, Y_{E2}) de l'installation électrique (1) ou au moyen d'une énergie d'arc (E) estimée dans l'installation électrique (1), laquelle indique l'énergie d'un arc électrique (X) se produisant dans l'installation électrique (1) et qui est déterminée à partir de l'au moins un paramètre d'énergie d'arc (Y_{E1}, Y_{E2}), et affiché,
**caractérisé en ce que**,
- pour la détermination du potentiel de risque (G), au moins un paramètre de probabilité d'arc (Y_{P}) de l'installation électrique (1) ou une probabilité d'arc (P) estimée, laquelle indique la probabilité de survenance pour l'apparition d'un arc électrique (X) dans l'installation électrique (1) et qui est déterminée à partir de l'au moins un paramètre de probabilité d'arc (Y_{P}), est en outre utilisé par l'ordinateur (12).

2. Procédé selon la revendication 1, **caractérisé en ce qu'**une mesure (M1..M3) pour la réduction du potentiel de risque (G), laquelle concerne une replanification ou reconfiguraion de l'installation électrique (1), est déterminée automatiquement par l'ordinateur (12).

3. Procédé selon la revendication 2, **caractérisé en ce que** ladite mesure (M1..M3) pour la réduction du potentiel de risque (G) est appliquée automatiquement par l'ordinateur (12) et l'installation électrique (1) est automatiquement replanifiée ou reconfigurée.

4. Procédé selon l'une des revendications 1 à 3, **caractérisé en ce que** le potentiel de risque (G) est déterminé pour le fonctionnement normal de l'installation électrique (1) et/ou pour le cas de maintenance de l'installation électrique (1) et/ou pour le cas de panne de l'installation électrique (1).

5. Procédé selon l'une des revendications 1 à 4, **caractérisé en ce que** les données concernant les composants (2..1 1, S1..S6, 11..13) nécessaires ou utilisés dans l'installation électrique (1) planifiée sont transmis par l'ordinateur (12) à un système de gestion de stocks (13) et **en ce que**, à la suite, lesdits composants (2..11, S1..S6, 11..13) sont sortis de l'entrepôt (14) et mis à disposition à un point de distribution.

6. Procédé selon l'une des revendications 1 à 5, **caractérisé en ce que**, en tant que paramètre d'énergie d'arc (Y_{E1}, Y_{E2}), est prévu
- un type d'un transformateur (7) et/ou d'un générateur et/ou d'un accumulateur prévus dans l'installation électrique (1) et/ou
- une impédance de l'installation électrique (1) et/ou
- un type d'un appareil de commutation (8) prévu dans l'installation électrique (1) et/ou
- un type d'un élément (5, S1..S6) pour l'extinction d'arc prévu dans l'installation électrique (1) et/ou
- un type d'une mesure de protection (10, 11) mécanique passive prévue dans l'installation électrique (1).

7. Procédé selon l'une des revendications 1 à 6, **caractérisé en ce que**, en tant que paramètre de probabilité d'arc (Y_{P}), est prévu
- un type de l'isolation et/ou
- un type des cloisons et barrières et/ou
- un type de la détection d'arc électrique (5, 6, I1..I3) prévues dans l'installation électrique (1).

8. Procédé selon l'une des revendications 1 à 7, **caractérisé en ce que**, pour chaque combinaison de l'énergie d'arc (E) et de la probabilité d'arc (P), un potentiel de risque (G) est enregistré dans une structure en forme de tableau (T1) et le potentiel de risque (G) pour une combinaison donnée d'énergie d'arc (E) et d'une probabilité d'arc (P) est déterminé au moyen de la structure en forme de tableau (T1).

9. Procédé selon l'une des revendications 1 à 7, **caractérisé en ce que**, pour chaque combinaison d'un paramètre d'énergie d'arc (Y_{E1}, Y_{E2}) et d'un paramètre de probabilité d'arc (Y_{P}), un potentiel de risque (G) est enregistré dans une structure multidimensionnelle en forme de tableau (T2) et le potentiel de risque (G) pour une combinaison donnée d'un paramètre d'énergie d'arc (Y_{E1}, Y_{E2}) et d'un paramètre de probabilité d'arc (YP) est déterminé au moyen de la structure multidimensionnelle en forme de tableau (T2).

10. Procédé selon l'une des revendications 1 à 9, **caractérisé en ce que** le potentiel de risque (G) est déterminé pour l'installation électrique (1) même et pour une personne située dans ou à proximité de l'installation électrique (G).

11. Système pour la planification assistée par ordinateur d'une installation électrique (1) comprenant un ordinateur (12), lequel est conçu
- pour détecter des composants (2..11, S1 ..S6, I1..I3), qui sont prévus dans l'installation électrique (1) et
- pour déterminer un potentiel de risque (G) au moyen d'au moins un paramètre d'énergie d'arc (Y_{E1}, Y_{E2}) de l'installation électrique (1) ou au moyen d'une énergie d'arc (E) estimée dans l'installation électrique (1), laquelle indique l'énergie d'un arc électrique (X) se produisant dans l'installation électrique (1) et qui est déterminée à partir de l'au moins un paramètre d'énergie d'arc (Y_{E1}, Y_{E2}), et pour l'afficher,
**caractérisé en ce que**,
- l'ordinateur (12) est en outre conçu pour utiliser en outre, pour la détermination du potentiel de risque (G), au moins un paramètre de probabilité d'arc (Y_{P}) de l'installation électrique (1) ou une probabilité d'arc (P) estimée, laquelle indique la probabilité de survenance pour l'apparition d'un arc électrique (X) dans l'installation électrique (1) et qui est déterminée à partir de l'au moins un paramètre de probabilité d'arc (Y_{P}).

12. Produit de programme informatique comportant un programme informatique qui y est enregistré, lequel peut être chargé dans/sur l'ordinateur (12) d'un système selon la revendication 11 et y exécuter un procédé selon l'une des revendications 1 à 10, lorsque le programme informatique y est exécuté.
